# EUROPÄISCHE PATENTSCHRIFT

(11) **EP 3 371 652 B1**
(45) Veröffentlichungstag und Bekanntmachung des Hinweises auf die Patenterteilung: **31.07.2019**
(21) Anmeldenummer: 16785413.2
(22) Anmeldetag: 17.10.2016
(51) Int. Cl.: G03B 17/02, H04N 5/225

(54) **KAMERAMODUL**
CAMERA MODULE
MODULE CAMÉRA

(30) Priorität: 04.11.2015 DE 102015221581
(43) Veröffentlichungstag der Anmeldung: 12.09.2018
(73) Patentinhaber: Magna Mirrors Holding GmbH, 63877 Sailauf (DE)
(72) Erfinder: HENNIG, Stephan, 63856 Bessenbach (DE)
(74) Vertreter: Völger, Silke Beatrix
(86) Internationale Anmeldenummer: PCT/EP2016/074879
(87) Internationale Veröffentlichungsnummer: WO 2017/076622

(56) Entgegenhaltungen:
- WO-A1-2013/116277
- WO-A1-2015/149547
- CN-U- 204 605 673
- US-A1- 2007 051 646
- US-A1- 2011 063 498

## Beschreibung

### Gebiet der Erfindung

Die vorliegende Erfindung betrifft ein Kameramodul umfassend ein Kameragehäuse, wobei das Kameragehäuse einen Gehäusegrundkörper und einen Haltering aufweist.

### Stand der Technik

Üblicherweise sind Kameragehäuse zur Befestigung an Kraftfahrzeugen vorgesehen, wobei in den Kameragehäusen Kameras angeordnet sind. Solche Kameras dienen zur Kollisionsvermeidung, zur Sichtgebung oder zur Bildgebung.

Ein Kameragehäuse der gattungsgemäßen Art ist aus der US 8,866,907 B2 bekannt. Das Kameragehäuse umfasst ein hinteres Gehäuseelement und ein vorderes Gehäuseelement, wobei das hintere Gehäuseelement und das vordere Gehäuseelement miteinander, wenn eine Kamera eingesetzt ist, verbindbar sind und wobei das vordere Gehäuseelement Mitteln zur Befestigung des Kameragehäuses am Kraftfahrzeug aufweist.

Nachteilig ist, dass beim Verbinden des hinteren Gehäuseelements mit dem vorderen Gehäuseelement, wenn die Kamera in den Gehäuseelementen eingesetzt ist, ein hoher Montageaufwand entsteht.

Die Entgegenhaltung DE102004044502 A1 zeigt ein Bildaufnahmesystem das in einem Gehäuse eingebracht ist. Das Gehäuse besteht aus einem Boden auf dem die Kamera aufgestellt wird. Befestigt die Kamera mit Federbügeln, die sich vom Boden des Gehäuses bis zur oberen Kante der Kamera erstrecken. Die Kamera wird in einem solchen Gehäuse nicht sicher geführt, und ist auch nicht spritzwassergeschützt.

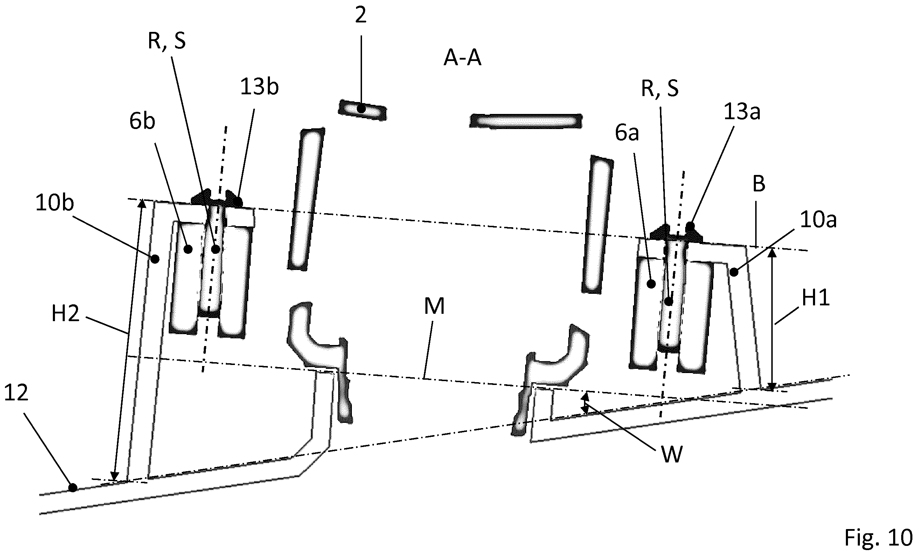

Aus der wie WO2013116277 A1 ist ein Video System für ein Fahrzeug bekannt. Dabei wird eine Kamera einem Gehäuse gesichert. In der Ausführungsform, wie sie in der Figur 10-12 dargestellt ist, wird die Kamera in ein Gehäuse eingeführt, das Führungsrippen aufweist und eine Öffnung für die Linse der Kamera. Um die Kamera zu befestigen wird eine Lasche von einem Seitenteil des Gehäuses über die Kamera zum anderen Seitenteil veklipst. Eine solche Führung weist immer ein gewisses Spiel für die Kameralinse auf, und die Arretierung ist durch die Tatsache, dass die Lasche die gesamte Breite des Gehäuses überdecken muss, nicht sicher.

Aus der WO 2004023608 A1 ist eine Verbindungsbauteil bekannt. Das Verbindungsbauteil, das beispielsweise eine Kamera enthalten kann, weist dabei im Inneren des Gehäuses ausgebildete Nocken auf, die die Kamera halten. Dabei werden die Seitenwände des Gehäuses an die Kamera geschwenkt. Eine solche Gehäusekamera Lösung ist allerdings nicht resistent gegen Spritzwasser und in einem Fahrzeug nicht einfach montiert war.

Aus der US 2007/051646 A1 ist ein Kraftfahrzeug-Kameramodul mit einem Kameragehäuse bekannt, wobei das Kameragehäuse einen Gehäusegrundkörper aufweist. Dieser Gehäusegrundkörper wird durch Seitenflächen und ein Abdeckelement begrenzt und bildet einen Aufnahmeraum für eine Kamera. Des Weiteren weist der Gehäusegrundkörper einen Haltering auf.

### Zusammenfassung der Erfindung

Es ist eine Aufgabe der Erfindung, ein Kameragehäuse der genannten Art in dieser Hinsicht zu verbessern, sodass der Montageaufwand zum Verbinden der Kamera mit dem Kameragehäuse reduziert wird.

Die Lösung der Aufgabe erfolgt durch ein Kraftfahrzeug-Kameramodul umfassend ein Kameragehäuse, wobei das Kameragehäuse einen Gehäusegrundkörper, der einen durch Seitenflächen und ein Abdeckelement begrenzten Aufnahmeraum für eine Kamera bildet, und einen Haltering aufweist, wobei der Haltering einteilig mit dem Gehäusegrundkörper an den Seitenteilen ausgebildet ist und mindestens zwei segmentförmige Schalen, zwei Halbschalen oder vier Viertelschalen umfasst, die mittels jeweils eines Filmscharniers (5a, 5b) an dem Gehäusegrundkörper (2.1) befestigt sind.

Der Gehäusegrundkörper ist im Spritzgussverfahren hergestellt, kann aber auch metallisch, beispielsweise aus Blechteilen gebildet sein.

Das Kameragehäuse und die Kamera bilden im Wesentlichen ein Kameramodul. Das Kameragehäuse ist dabei speziell für die Kamera ausgebildet und weist eine der Kamera angepasste Geometrie auf. Öffnungen im Kameragehäuse ermöglichen das Einsetzen der Kamera sowie den erforderlichen Zugang für elektrische Anschlüsse. Das Kameragehäuse verhindert zuverlässig, dass Schmutz und/oder Spritzwasser an die Elektronik der Kamera gelangen kann.

Weiterbildungen der Erfindung sind in den abhängigen Ansprüchen, der Beschreibung sowie den beigefügten Zeichnungen angegeben.

Vorzugsweise umfasst der Haltering mindestens zwei segmentförmige Schalen, insbesondere zwei Halbschalen oder vier Viertelschalen. Die Halbschalen bzw. Viertelschalen sind so ausgebildet, dass sie beweglich sind.

Wenn es die Geometrie des Kameragehäuses erlaubt, beispielsweise, wenn das Kameragehäuse im Wesentlichen zylindrisch oder kugelförmig ausgebildet ist, können auch beliebig viele, insbesondere ungeradzahlige, Schalen ausgebildet sein

Die zwei Schalen sind jeweils mittels eines Filmscharniers an dem Gehäusegrundkörper befestigt. Die Filmscharniere ermöglichen, dass die Schalen verschwenkbar sind.

Ist der Gehäusegrundkörper metallisch, sind die Schalen über die Filmscharniere am Gehäusegrundkörper angespritzt.

In einer bevorzugten Ausführungsform sind die Schalen bevorzugt als zwei Halbschalen ausgebildet, welche am Gehäusegrundkörper einander gegenüberliegend befestigt. Der Gehäusegrundkörper weist vier Seitenflächen auf, welche im Wesentlichen eine rechteckige bzw. quadratische Form bilden. Der Gehäusegrundkörper weist weiter eine Abdeckfläche auf, welche gegenüber einer Kameragehäuseöffnung, durch welche die Kamera in den Gehäusegrundkörper einsetzbar ist.

Erfindungsgemäß weist der Gehäusegrundkörper zumindest einen Befestigungsabschnitt auf. Vorzugsweise weist der Gehäusegrundkörper zwei oder vier Befestigungsabschnitte auf, wobei die Befestigungsabschnitte an den beiden Seitenflächen, an denen die Halbschalen nicht befestigt sind, angeordnet sind. Die Befestigungsabschnitte sind bevorzugt diagonal gegenüberliegend an den Ecken der Seitenflächen angeordnet.

Der Befestigungsabschnitt weist zumindest abschnittsweise ein Gewinde auf. Der Befestigungsabschnitt kann ein Verstärkungselement aufweisen, welches mit eingespritzt ist. Das Verstärkungselement kann beispielsweise eine metallische Hülse sein, die das Gewinde aufweist. Die Mittelachse des Gewindes verläuft dabei im Wesentlichen parallel zu der Seitenfläche des Gehäusegrundkörpers.

In einer bevorzugten Ausführungsform ist das integrierte Federelement in Form einer Wölbung in der zumindest einen Fläche ausgebildet, wobei sich die Wölbung in Richtung Gehäuseinnenraum erstreckt.

Dieses Federelement kann beispielsweise durch in der Abdeckfläche und/oder zumindest einer Seitenfläche integriert sein.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht des Kameragehäuses
- Fig. 2: ist eine perspektivische Ansicht des Kameragehäuses in welcher die Kamera eingesetzt ist.

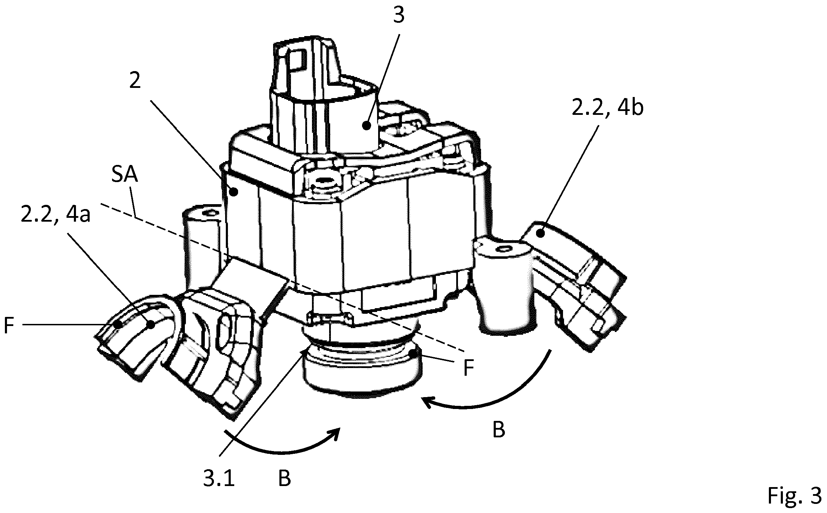

- Fig. 3: ist eine weitere perspektivische Ansicht mit der im Kameragehäuses eingesetzten Kamera, wobei die Halbschalen des Halterings teilweise verschwenkt sind.
- Fig. 4: ist eine Seitenansicht des Kameramoduls, wobei die Halbschalen mit der Kamera in Eingriff sind.
- Fig. 5: ist eine perspektivische Ansicht eines erfindungsgemäßen Kameramoduls und einer kraftfahrzeugseitigen Befestigungsanordnung.
- Fig. 6: ist eine Draufsicht des erfindungsgemäßen Kameramoduls sowie den zweiten Befestigungsabschnitten gemäß Fig. 5.

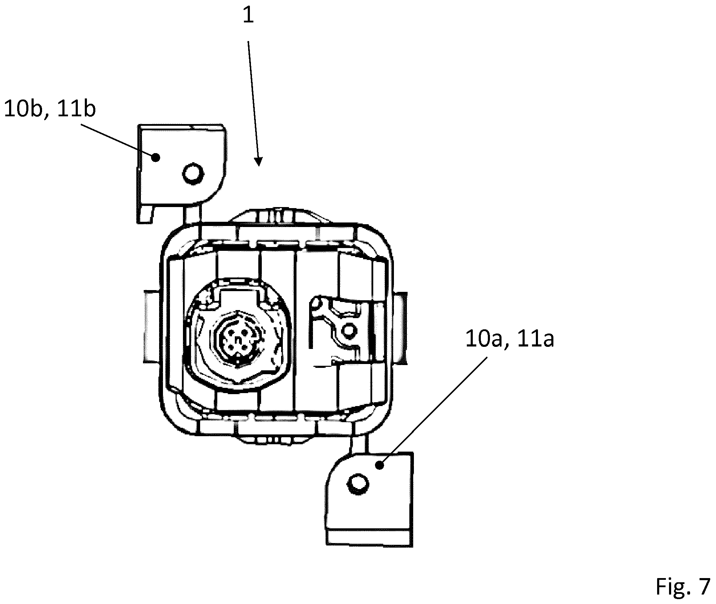

- Fig. 7: ist eine weitere Draufsicht des Kameramoduls und den zweiten Befestigungsabschnitten gemäß Fig. 1, wobei die ersten Befestigungsabschnitte in den zweiten Befestigungsabschnitten gehalten sind.
- Fig. 8: ist eine Seitenansicht in welcher das Kameramodul mit der kraftfahrzeugseitigen Befestigungsanordnung verschraubt ist
- Fig. 9: ist eine Draufsicht auf das Kameramodul.
- Fig. 10: ist eine Schnittdarstellung A-A gemäß Fig. 9.
- Fig. 11: ist eine Schnittdarstellung B-B gemäß Fig. 9.

### Detaillierte Beschreibung der Erfindung

Das erfindungsgemäße Kameramodul weist im Wesentlichen ein Kameragehäuse 2 sowie eine in das Kameragehäuse 2 eingesetzte Kamera 3 auf.

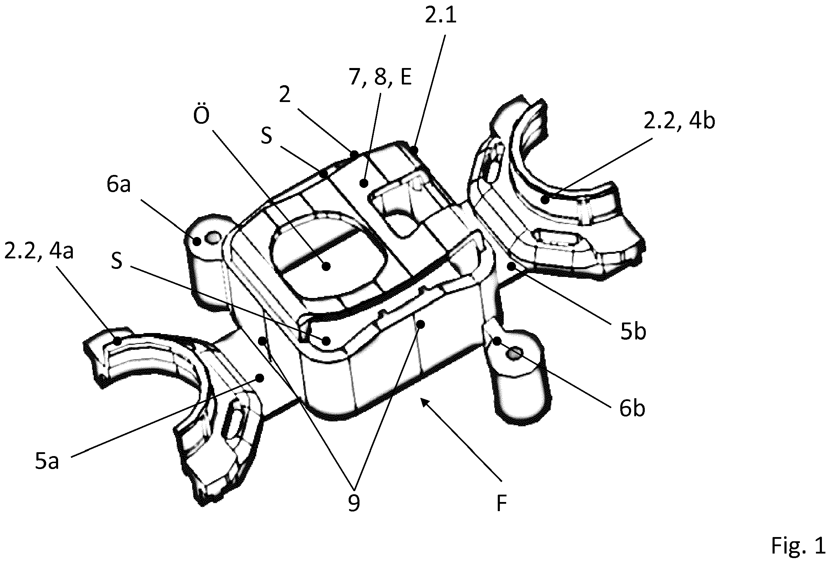

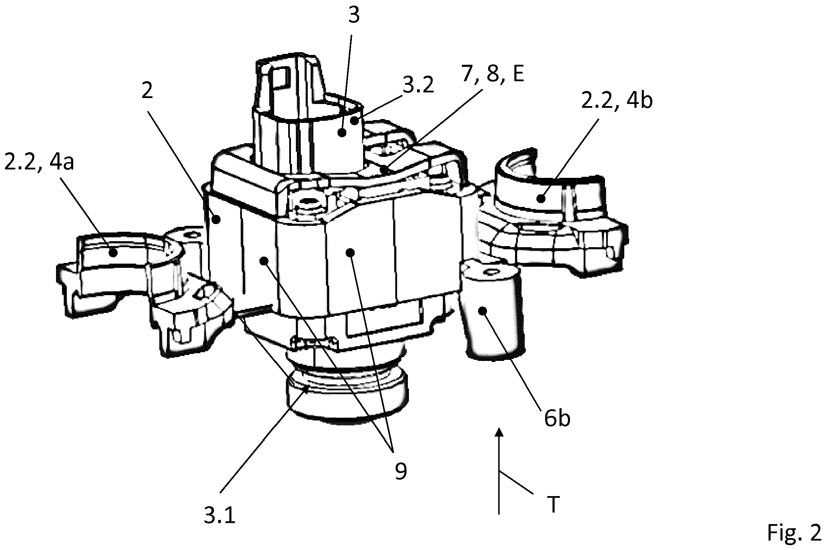

Fig. 1 zeigt eine perspektivische Ansicht des Kameragehäuses 2 mit integriertem Haltering 2.2. Der Gehäusegrundkörper 2.1 des Kameragehäuses 2 weist vier Seitenflächen 9 auf, welche eine im Wesentlichen rechteckige bzw. quadratische Form bilden. Der Gehäusegrundkörper 2.1 weist weiter ein Abdeckelement 8 auf. Das Abdeckelement 8 überspannt den durch die Seitenflächen 9 gebildeten Aufnahmeraum für die Kamera 3. Das Abdeckelement 8 ist an ersten und zweiten gegenüberliegenden Seitenflächen angebunden. Das Abdeckelement 8 weist eine nach innen gewölbt ausgebildete Fläche 7 auf. Zwischen den dritten und vierten gegenüberliegenden Seitenflächen ist eine schlitzförmige Ausnehmung S eingebracht. Durch diese Ausgestaltung und Anbindung des Abdeckelementes 8 wirkt dieses als Federelement. In das Abdeckelement 8 ist eine Öffnung Ö eingebracht. Bei in das Kameragehäuse 2 eingesetzter Kamera 3 ragt ein Endbereich 3.2 der Kamera, welcher auch elektronische Anschlüsse aufweisen kann, durch diese Öffnung Ö nach außen. Dies ist in der Figur 2 ersichtlich. Das Abdeckelement 8 ist gegenüberliegend zu einer Gehäusegrundkörperöffnung 8.1 angeordnet, durch welche die Kamera 3 in das Kameragehäuse 2 bzw. den Gehäusegrundkörper 2.1 einsetzbar ist. Das Kameragehäuse ist aus einem thermoplastischen Kunststoffmaterial in einem Spritzgießverfahren hergestellt. Der integrierte Haltering 2.2 umfasst zwei Halbschalen 4a, 4b, welche über Filmscharniere (5a, 5b) mit dem Gehäusegrundkörper 2.1 an den der Gehäusegrundkörperöffnung 8.1 zugewandten Endbereichen der Seitenflächen 9 verbunden ist und eine Schwenkachse SA bilden. Die Halbschalen 4a, 4b sind dabei am Gehäusegrundkörper 2.1 an einander gegenüberliegenden ersten und zweiten Seitenflächen 9 angeordnet. Der Gehäusegrundkörper 2.1 weist des Weiteren erste Befestigungsabschnitte 6a, 6b auf. Die ersten Befestigungsabschnitte 6a, 6b sind an den dritten und vierten einander gegenüberliegenden Seitenflächen 9 angeordnet. Aus der Darstellung der Figur 1 ist ersichtlich, dass die Befestigungsabschnitte 6a, 6b an den einander diagonal gegenüberliegenden Ecken der dritten und vierten Seitenflächen 9 angeordnet sind.

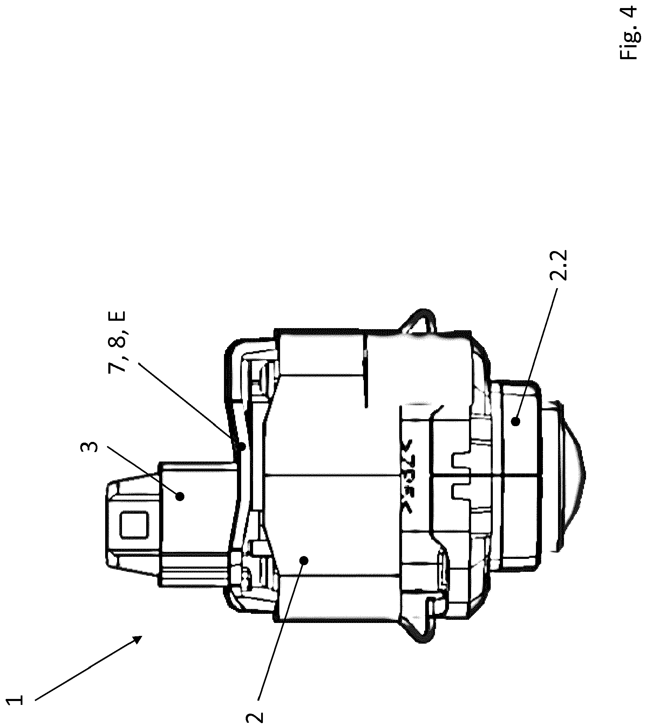

Fig. 2 zeigt die in den Gehäusegrundkörper 2.1 eingesetzte Kamera 3 bei geöffnetem Gehäusegrundkörper 2.1. Die Kamera 3 wird in Richtung des Pfeils T in den Gehäusegrundkörper eingefügt. Nachdem die Kamera 3 in das Kameragehäuse 2 eingesetzt ist, werden die Halbschalen 4a, 4b des Halterings 2.2 über die Schwenkachsen SA verschwenkt, bis diese, wie in Fig. 4 dargestellt, mit einem umlaufenden Abschnitt 3.1 der Kamera 3 in Kontakt stehen. Die Verschwenkbewegung der Halbschalen 4a, 4b ist durch die Pfeile B dargestellt. Die Halbschalen 4a, 4b und/oder der umlaufene Abschnitt 3.1 der Kamera 3 weisen ringförmig verlaufende angefaste Flächen F auf. Die angefasten Flächen bewirken eine Selbsthemmung wodurch die zwei Halbschalen 4a, 4b in Position gehalten werden. Das Abdeckelement 8 erzeugt, aufgrund der Ausgestaltung als Federelement eine Vorspannung, wodurch die Kamera 3 spielfrei im Gehäusegrundkörper 2.1 gehalten wird.

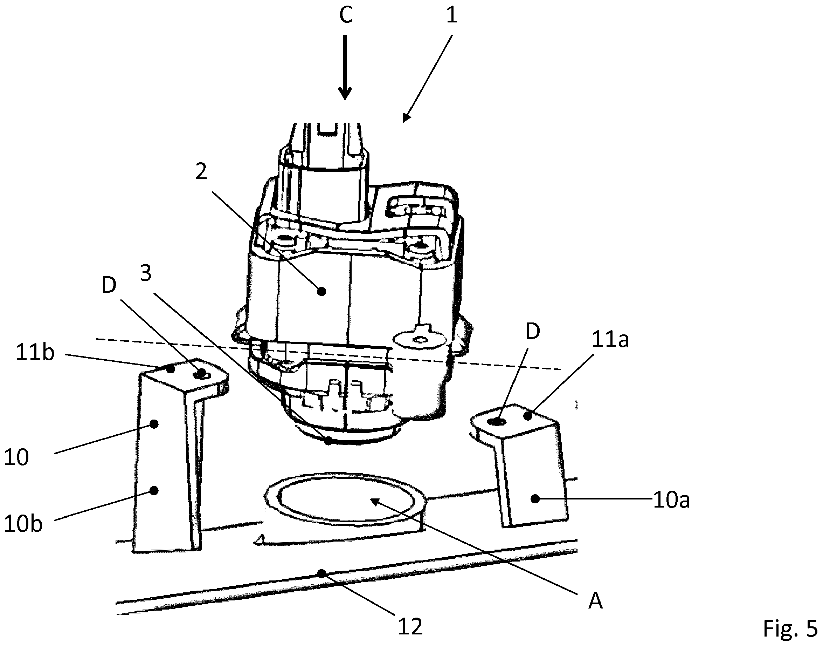

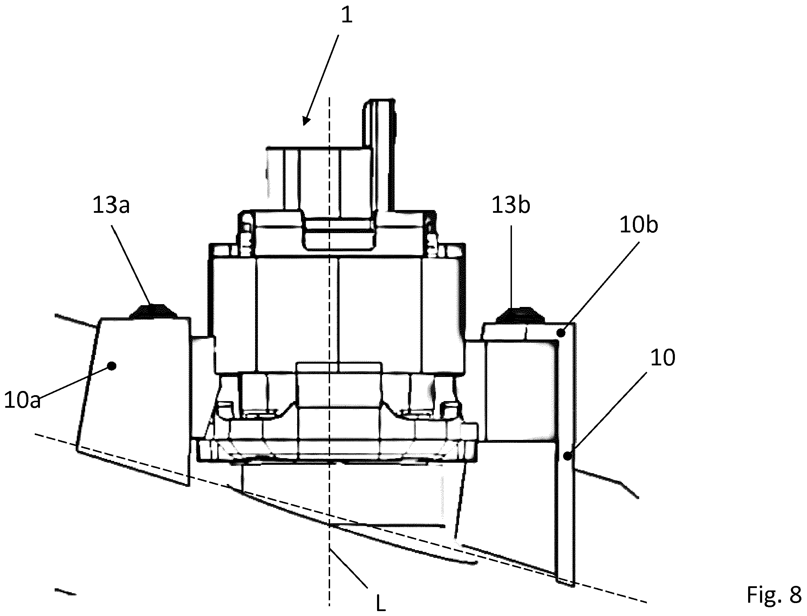

Fig. 5 zeigt das Kameramodul 3 sowie eine kraftfahrzeugseitige Befestigungsanordnung. Wie es insbesondere aus der Darstellung der Figur 8 zu erkennen ist, weist die kraftfahrzeugseitige Befestigungsanordnung einen Oberflächenabschnitt mit geneigter Oberfläche 12 auf, in die eine Kameramontageöffnung eingebracht A ist. Der Oberflächenabschnitt ist beispielsweise ein Spiegelgehäuse oder ein anderes karosserieseitiges Bauteil an das ein Kameramodul befestigt werden soll. Weiterhin sind zwei zweite Befestigungsabschnitte 10a, 10b auf der geneigten Oberfläche 12 angeordnet. Die zweiten Befestigungsabschnitte 10a, 10b sind im Wesentlichen L-förmig ausgebildet und weisen vertikal nach oben ragende Schenkel 10 und horizontal an den Schenkeln auskragende Befestigungsflächen 11a, 11b auf, die horizontal ausgerichtet sind und Durchgangsbohrungen D aufweisen, die zur Montage des Kameramoduls an der kraftfahrzeugseitigen Befestigungsanordnung dienen. Die Befestigungsabschnitte 10a, 10b weisen unterschiedliche Höhen H1 und H2 auf, wobei die unterschiedlichen Höhen derart gewählt sind, dass die Befestigungsflächen 11a, 11b in einer Ebene B liegen, die zu einer Montageebene M der Kamera 3 parallel ist. Die Montageebene M bildet dabei einen Winkel W mit der geneigten Oberfläche 12. Die Montageebene M ist dabei unter einem Winkel von 90 Grad zu der Mittellängsachse L des Kameramoduls angeordnet.

Ein Pfeil C zeigt die Richtung in welche das Kameramodul 1 in die Kameramontageöffnung A eingesetzt wird, wobei die Kameralinse der Kamera 3 durch die Kameramontageöffnung A durchgesteckt wird. Das Kameragehäuse 2, insbesondere der integrierte Haltering 2.2, dichtet dabei gegen die Kameramontageöffnung A, welche durch einen ringförmige Umrandung begrenzt ist ab und verhindert ein weiteres Durchstecken des Kameramoduls 1 durch die Kameramontageöffnung A.

Beim Einsetzen des Kameramoduls 1 in die Kameramontageöffnung A müssen die ersten Befestigungsabschnitte 6a, 6b und die zweiten Befestigungsabschnitte 10a, 10b zueinander versetzt sein, um eine ungewollte Kollision der ersten Befestigungsabschnitte 6a, 6b mit den Befestigungsflächen 11a, 11b der zweiten Befestigungsabschnitten 10a, 10b zu verhindern.

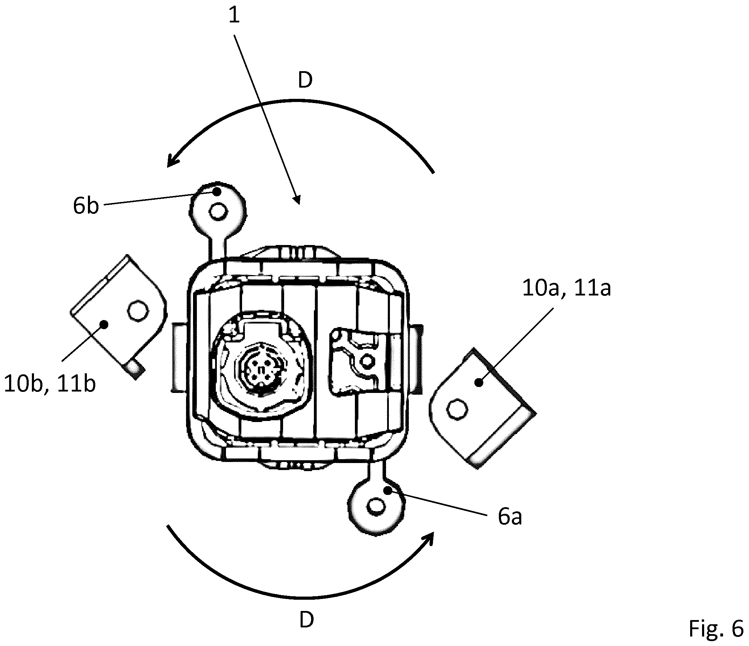

In Fig. 6 ist eine Draufsicht des Kameramoduls 1 und der kraftfahrzeugseitige Befestigungsanordnung dargestellt. Die zwei ersten Befestigungsabschnitte 6a, 6b des Kameramoduls 1 und die zwei zweiten Befestigungsabschnitte 10a, 10b der kraftfahrzeugseitigen Befestigungsanordnung werden durch Verdrehen des Kameramoduls 1 wie durch die Pfeile D dargestellt, in der Kameramontageöffnung A derart ausgerichtet, dass jeweils die Durchgangsbohrung eines ersten Befestigungsabschnittes 6a bzw. 6b und die Durchgangsbohrung der Befestigungsfläche eines zweiten Befestigungsabschnittes 10a bzw. 10b fluchtend zueinander verlaufen. Die Bauteile werden in dieser Position über Schrauben fixiert. Die nach oben ragenden Schenkel der Befestigungsabschnitte 10a, 10b wirken als mechanische Anschläge, die ein weiteres Verdrehen des Kameramoduls 1 verhindern.

In Fig. 8 ist eine Seitenansicht in welcher das Kameramodul 1 mit dem Kraftfahrzeug mittels Verschrauben 13a, 13b verbunden ist, dargestellt.

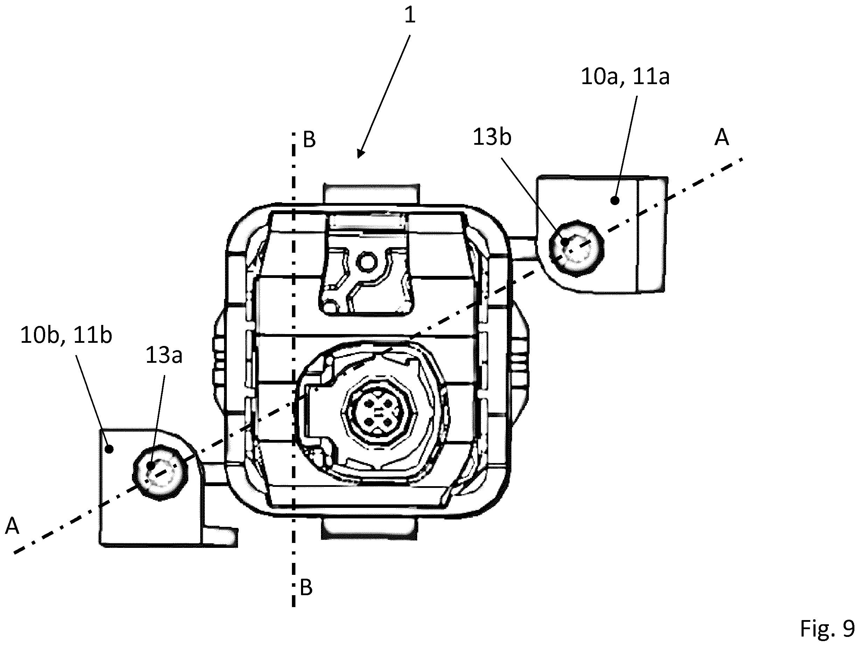

In Fig. 9 ist eine Draufsicht des mit dem Kraftfahrzeug verschraubten Kameramoduls 1 zu sehen.

Fig. 10 zeigt eine Schnittansicht A-A gemäß Fig. 9 durch die Befestigungs-anordnung. Die ersten Befestigungsabschnitte 6a, 6b des Kameramoduls weisen einen zylindrischen Grundkörper auf, in die eine Durchgangsbohrung mit einem Innengewindeabschnitt eingebracht ist. Die Darstellung zeigt die Befestigung des Kameramoduls an den zweiten Befestigungsabschnitten, wobei jeweils eine Schraube 13a, 13b vorgesehen ist. Die Schrauben 13a, 13b sind hierbei durch die Durchgangsbohrungen der zwei zweiten Befestigungsabschnitte 10a, 10b gesteckt und im Innengewindeabschnitt eingeschraubt. Wie es aus der Zeichnung zu erkennen ist, ist die jeweilige Mittelachse S zu der Mittelachse R des jeweils zugeordneten Innengewindeabschnitts des ersten Befestigungsabschnitts 6a, 6b fluchtend angeordnet. Die Mittelachse R des Innengewindeabschnitts verläuft im Wesentlichen parallel zu der Seitenfläche 9 des Kameragehäuses 2.

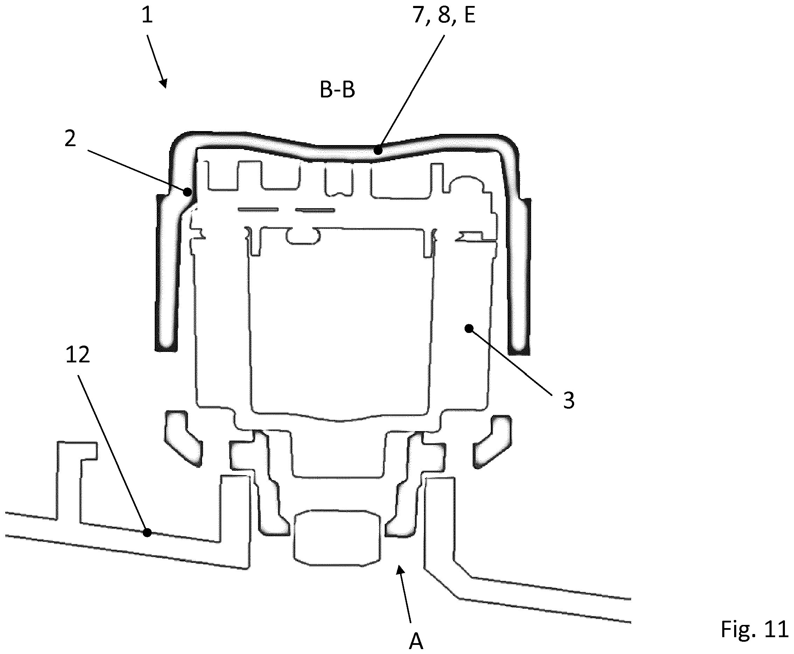

Fig. 11 zeigt eine Schnittansicht B-B gemäß Fig. 9. Das Kameragehäuse 2 weist, wie es bereits obenstehend näher erläutert ist ein Abdeckelement 8 auf, welches als integriertes Federelement 7 wirkt und die Form einer Wölbung E aufweist. Das als Wölbung E ausgebildete integrierte Federelement 7 erzeugt eine Vorspannung welche gegen die Kamera 3 wirkt und so die Kamera 3 spielfrei im Kameragehäuse 2 hält. In einer nicht gezeigten Ausführungsform weisen vorteilhafterweise zumindest eine Seitenfläche 9 und die Abdeckfläche 8 eine Wölbung E auf. Die Wölbung der Seitenfläche ist dabei in Richtung Aufnahmeraum des Gehäusegrundkörpers 2.1 ausgebildet.

### Bezugszeichenliste

- 1: Kameramodul
- 2: Kameragehäuse
- 2.1: Gehäusegrundkörper
- 2.2: Haltering
- 3: Kamera
- 3.1: umlaufender Abschnitt
- 4a, 4b: Halbschale
- 5a, 5b: Filmscharnier
- 6a, 6b: erster Befestigungsabschnitt
- 7: integriertes Federelement
- 8: Abdeckelement
- 9: Seitenfläche
- 10a, 10b: zweiter Befestigungsabschnitt
- 11a, 11b: Befestigungsfläche
- 12: erste geneigte Fläche
- 13a, 13b: Verschraubung, Schraube

- A: Kameramontageöffnung
- B: Pfeil
- C: Pfeil
- D: Pfeil
- E: Wölbung
- F: Kameragehäuseöffnung
- R: Mittelachse
- S: Mittelachse

## Patentansprüche

1. Kraftfahrzeug-Kameramodul (1) umfassend ein Kameragehäuse (2), wobei das Kameragehäuse (2) einen Gehäusegrundkörper (2.1), der einen durch Seitenflächen (9) und ein Abdeckelement (8) begrenzten Aufnahmeraum für eine Kamera bildet, und einen Haltering (2.2) aufweist,
**dadurch gekennzeichnet, dass** der Haltering (2.2) einteilig mit dem Gehäusegrundkörper (2.1) an den Seitenteilen (9) ausgebildet ist und mindestens zwei segmentförmige Schalen (4a, 4b) gebildet von zwei Halbschalen (4a, 4b) oder vier Viertelschalen umfasst, die mittels jeweils eines Filmscharniers (5a, 5b) an dem Gehäusegrundkörper (2.1) befestigt sind.

2. Kraftfahrzeug-Kameramodul (1) nach Anspruch 1, **dadurch gekennzeichnet, dass** die zumindest zwei Schalen (4a, 4b) als zwei Halbschalen (4a, 4b) ausgebildet sind, welche am Gehäusegrundkörper (2.1), einander gegenüberliegend, befestigt sind.

3. Kraftfahrzeug-Kameramodul (1) nach zumindest einem der vorhergehenden Ansprüche, **dadurch gekennzeichnet, dass** am Gehäusegrundkörper (2.1) zumindest ein Befestigungsabschnitt (6a, 6b) ausgebildet ist.

4. Kraftfahrzeug-Kameramodul (1) nach Anspruch 3, **dadurch gekennzeichnet, dass** im Befestigungsabschnitt (6a, 6b) zumindest abschnittsweise ein Gewinde ausgebildet ist.

5. Kraftfahrzeug-Kameramodul (1) nach zumindest einem der vorhergehenden Ansprüche, **dadurch gekennzeichnet, dass** zumindest eine Fläche (8, 9) des Gehäusegrundkörpers (2.1) ein integriertes Federelement (7) zur Vorspannung der Kamera (3) im Gehäusegrundkörper (2.1) aufweist.

6. Kraftfahrzeug-Kameramodul (1) nach Anspruch 5, **dadurch gekennzeichnet, dass** das integrierte Federelement (7) in Form einer Wölbung (E) in der zumindest einen Fläche (8, 9) ausgebildet ist, wobei sich die Wölbung (E) in Richtung Gehäuseinnenraum erstreckt.

## Claims

1. Motor-vehicle camera module (1) comprising a camera housing (2), the camera housing (2) having a main housing body (2.1), which forms a camera-accommodating space delimited by side surfaces (9) and a covering element (8), and having a retaining ring (2.2), **characterized in that** the retaining ring (2.2) is formed on the side parts (9), in one piece with the main housing body (2.1), and comprises at least two segment-form shells (4a, 4b), formed by two half-shells (4a, 4b) or four quarter-shells, which are fastened on the main housing body (2.1) by means of a respective film hinge (5a, 5b).

2. Motor-vehicle camera module (1) according to Claim 1, **characterized in that** the at least two shells (4a, 4b) are designed in the form of two half-shells (4a, 4b) which are fastened opposite one another on the main housing body (2.1).

3. Motor-vehicle camera module (1) according to at least one of the preceding claims, **characterized in that** at least one fastening portion (6a, 6b) is formed on the main housing body (2.1).

4. Motor-vehicle camera module (1) according to Claim 3, **characterized in that** a thread is formed in at least part of the fastening portion (6a, 6b).

5. Motor-vehicle camera module (1) according to at least one of the preceding claims, **characterized in that** at least one surface (8, 9) of the main housing body (2.1) has an integrated spring element (7) for the purpose of prestressing the camera (3) in the main housing body (2.1).

6. Motor-vehicle camera module (1) according to Claim 5, **characterized in that** the integrated spring element (7) is in the form of a curved portion (E) in the at least one surface (8, 9), wherein the curved portion (E) extends in the direction of the housing interior.

## Revendications

1. Module caméra (1) pour un véhicule automobile, comprenant un boîtier de caméra (2), le boîtier de caméra (2) présentant un corps de base de boîtier (2.1) qui forme un espace de réception pour une caméra limité par des surfaces latérales (9) et par un élément de recouvrement (8), et qui présente une bague de retenue (2.2), **caractérisé en ce que** la bague de retenue (2.2) est réalisée d'une seule pièce avec le corps de base de boîtier (2.1) au niveau des parties latérales (9) et comprend au moins deux coques en forme de segment (4a, 4b) formées par deux demi-coques (4a, 4b) ou par quatre quarts de coques, qui sont à chaque fois fixés au moyen d'une charnière à film (5a, 5b) au corps de base de boîtier (2.1).

2. Module caméra (1) pour un véhicule automobile selon la revendication 1, **caractérisé en ce que** les au moins deux coques (4a, 4b) sont réalisées sous forme de deux demi-coques (4a, 4b) qui sont fixées à l'opposé l'une de l'autre sur le corps de base de boîtier (2.1).

3. Module caméra (1) pour un véhicule automobile selon au moins l'une quelconque des revendications précédentes, **caractérisé en ce qu'**au moins une partie de fixation (6a, 6b) est réalisée au niveau du corps de base de boîtier (2.1).

4. Module caméra (1) pour un véhicule automobile selon la revendication 3, **caractérisé en ce qu'**un filetage est réalisé au moins en partie dans la partie de fixation (6a, 6b).

5. Module caméra (1) pour un véhicule automobile selon au moins l'une quelconque des revendications précédentes, **caractérisé en ce qu'**au moins une surface (8, 9) du corps de base de boîtier (2.1) présente un élément de ressort intégré (7) pour précontraindre la caméra (3) dans le corps de base de boîtier (2.1).

6. Module caméra (1) pour un véhicule automobile selon la revendication 5, **caractérisé en ce que** l'élément de ressort intégré (7) est réalisé sous la forme d'un cintrage (E) dans l'au moins une surface (8, 9), le cintrage (E) s'étendant dans la direction de l'espace intérieur du boîtier.
